# EUROPÄISCHE PATENTSCHRIFT

(11) **EP 0 666 431 B1**
(45) Veröffentlichungstag und Bekanntmachung des Hinweises auf die Patenterteilung: **05.03.1997**
(21) Anmeldenummer: 94119221.3
(22) Anmeldetag: 06.12.1994
(51) Int. Cl.: F16D 65/34, B60T 13/74

(54) **Elektromechanische Zuspannvorrichtung für Reibungsbremsen**
Electromechanic application device for friction brakes
Dispositif d'application électromécanique pour freins à friction

(30) Priorität: 07.02.1994 DE 4403719
(43) Veröffentlichungstag der Anmeldung: 09.08.1995
(73) Patentinhaber: Knorr-Bremse Systeme für Schienenfahrzeuge GmbH, 80809 München (DE)
(72) Erfinder: Bartlechner, Manfred, D-82234 Wessling (DE); Sponfeldner, Oskar, D-84453 Mühldorf/Inn (DE)

(56) Entgegenhaltungen:
- EP-B- 0 166 156
- DE-A- 3 423 510

## Beschreibung

Die Erfindung betrifft eine elektromechanische Zuspannvorrichtung für Reibungsbremsen von Fahrzeugen, insbesondere Schienenfahrzeugen, mit den im Gattungsbegriff des Patentanspruches 1 genannten Merkmalen.

Eine Zuspannvorrichtung dieser Art ist aus der EP-B-0 166 156 bekannt. Das Drehkeilgetriebe weist hierbei in einem axial drehbar gegen das Gehäuse des Federspeichers abgestützten Käfig um Zu diesem radiale Achsen drehbar gelagerte Rollen auf, die an spiralflächenartigen Keilflächen eines Drehkeils abrollbar sind, wobei der Drehkeil undrehbar und axial verschieblich zum Gehäuse gegenüberliegend zu den Keilflächen an Speicherfedern des Federspeichers abgestützt ist. Der Käfig ist über eine Stirnverzahnung mit dem Zahnkranz eines Ritzels drehgekuppelt, wobei der Zahnkranz über eine Einweg-Drehkupplung bzw. einen Freilauf auf einem Wellenstummel sitzt, der vom durch eine elektrich betätigbare Bremse abbremsbaren Elektromotor über ein Untersetzungsgetriebe antreibbar ist. Das Untersetzungsgetriebe ist als Planetengetriebe mit einem drehbaren, durch eine zweite elektrische Bremse stillsetzbaren Gehäuse ausgebildet. Der Gesamtaufbau dieser bekannten Zuspannvorrichtung ist vielteilig, kompliziert und aufwendug und dementsprechend teuer.

Es ist Aufgabe der Erfindung, eine Zuspannvorrichtung der eingangs genannten Art so auszubilden, daß sie wenige Bauelemente benötigt sowie einfach, gewichtssparend, kompakt und kostengünstig herstellbar ist.

Diese Aufgabe wird für eine Zuspannvorrichtung der eingangs genannten Art gemäß der Erfindung durch eine Ausbildung entsprechend den im kennzeichnenden Teil des Anspruches 1 genannten Merkmalen gelöst.

In den Unteransprüchen sind weitere, gemäß der Erfindung vorteilhafte Ausbildungsmöglichkeiten für eine derartige Zuspannvorrichtung aufgezeigt.

In den Zeichnungen ist ein vorteilhaftes Ausführungsbeispiel einer nach der Erfindung ausgebildeten Zuspannvorrichtungen schematisch dargestellt, und zwar zeigt
- Fig 1: ein Schnittbild einer Zuspannvorrichtung und
- Fig 2: ein Schnittbild entlang der Linie A-B in Fig. 1.

Gleiche oder einander entsprechende Teile sind in den Fig. mit gleichen Bezugszeichen bezeichnet.

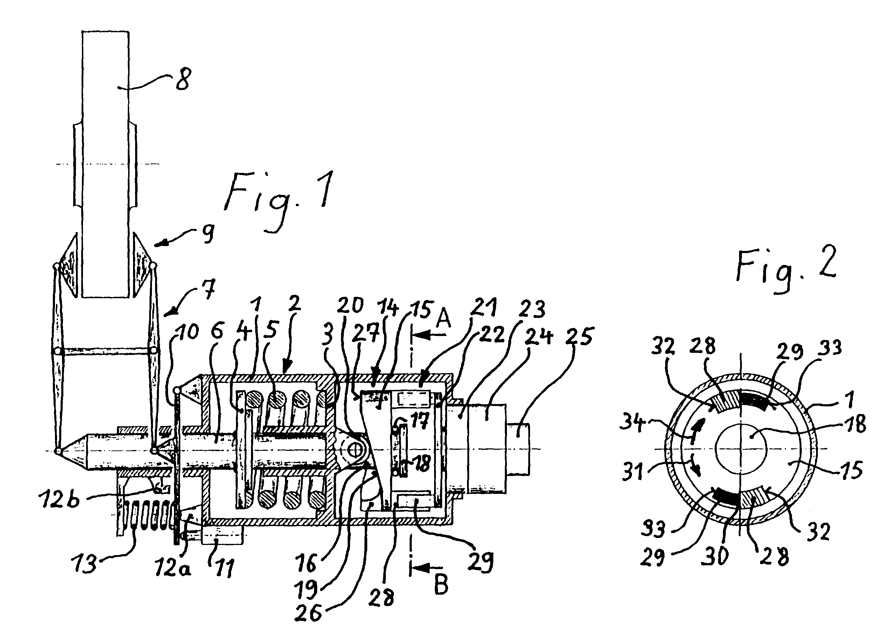

Die zweistufig mit einer Löse- und zwei Bremsstufen ausgebildete Zuspannvorrichtung nach Fig. 1 weist ein Gehäuse 1 für einen Federspeicher 2 auf, welcher eine einerseits gegen eine Gehäusewandung 3 und andererseits gegen einen Federteller 4 abgestützte Speicherfeder 5 beinhaltet. Der Federteller 4 ist auf einem Betätigungsstößel 6 gehaltert, welcher am Gehäuse 1 axialverschieblich gelagert und an seinem aus dem Gehäuse 1 ins Freie ragenden Ende an einem Ende einer Bremszange 7 angelenkt ist. Die Bremszange 7 bildet zusammen mit einer Bremsscheibe 8 eine eine Reibungsbremse 9 darstellende Scheibenbremse. Das andere Ende der Bremszange 7 ist am mittleren Bereich eines Drehhebels 10 angelenkt, dessen eines Ende am Gehäuse 1 drehbar gelagert ist und dessen anderes Ende einen Schalter 11 zu schalten vermag; der Drehhebel 10 stellt somit ein Festpunktlager für die Bremszange 7 dar, welches über eine durch den Drehhebel 10 bewirkte Übersetzung den Schalter 11 zu schalten vermag. Zwei Anschläge 12a und 12b begrenzen den Drehbereich des von einer Feder 13 in Drehrichtung zum Zuspannen der Bremszange 7 drehbelasteten Drehhebels 10.

Anschließend an die Gehäusewandung 3 befindet sich im Gehäuse 1 ein Getriebe 14 mit einem Drehkeil 15, der drehbar auf einer die Gehäusewandung 3 durchsetzenden Verlängerung 16 des die Speicherfeder 5 durchgreifenden Betätigungsstößels 6 gelagert und auf seiner der Gehäusewandung 3 abgewandten Seite über ein Axiallager 17 gegen einen Ringflansch 18 am Ende der Verlängerung 16 axial abgestützt ist. Andererseits trägt der Drehkeil 15 zueinander symmetrisch versetzt zwei als Schraubenflächen ausgebildete Keilflächen 19, welche gegen je eine Rolle 20 anliegen; die Rollen 20 sind an der Gehäusewandung 3 drehbar gelagert. Das Getriebe 14 vermag somit Drehbewegungen des Drehkeiles 15 in Axialbewegungen des Betätigungsstößels 6 bzw umgekehrt umzusetzten.

Der Drehkeil 15 ist nahe seines radial äußeren Randes vermittels einer Axialverschiebungen ermöglichenden Klauenkupplung 21 mit einer Antriebsscheibe 22 drehgekoppelt, die drehbar und im wesentlichen axial unverschieblich gelagert und über ein Untersetzungsgetriebe 23 von einem Elektromotor 24 antreibbar ist; vermittels einer elektrisch betätigbaren Bremse 25 ist der Elektromotor 24 abbrems- und feststellbar.

Die Keilflächen 19 schließen mit ihren einen, dem Federteller 4 entfernteren und damit in Drehrichtung zum Entspannen des Federspeichers 2 bzw. Zuspannen der Bremszange 7 liegenden Enden mittels jeweils einer axial steilen, kuzen Anlauffläche 26 an das jeweils andere Ende der nächsten Keilfläche 19 an, die Anlaufflächen 26 sind zumindest angenähert entsprechend dem Durchmesser bzw. Außenzylinder der Rollen 20 gerundet ausgebildet. An ihrem jeweils anderen Ende weist jede Keilfläche 19 einen in einer Radialebene verlaufenden, ebenen Flächenabschnitt 27 auf. Es können, wie in Fig.1 dargestellt, zwei Keilflächen 19 vorgesehen sein, es kann jedoch auch nur eine Keilfläche oder es können mehr als zwei dieser Keilflächen über den Umfang des Drehkeils 15 gleichmäßig verteilt angeordnet werden.

Die Klauenkupplung 21 ist aus an der den Keilflächen 19 abgewandten Seite des Drehkeils 15 angeordneten Klauen 28 und seitens des Drehkeils 15 an der Antriebsscheibe 22 angeordneten Klauen 29 gebildet, wobei die Klauen 28 und 29 jeweils einander zugewandt axial vorspringen und einander axial übergreifen. Wie aus Fig 2 ersichtlich können die Klauen 28 und 29 mit ihren einander gegenüberstehenden, in Umfangsrichtung liegenden Seitenflächen 30 aneinander anliegen, derart, daß ein in Spannrichtung des Federspeichers 2, also in Pfeilrichtung 31, wirkendes Drehmoment von der Antriebsscheibe 22 auf den Drehkeil 15 übertragbar ist; zwischen den jeweils anderseitigen Seitenflächen 32 und 33 der Klauen 28 und 29 besteht dabei ein Abstand. Die Klauenkupplung 21 weist damit eine drehbegrenzte Freilauffunktion auf.

Die Speicherfeder 5, der Betätigungsstößel 6, der Drehkeil 15, das Untersetzungsgetriebe 23, der Elektromotor 24 und die Bremse 25 sind nach dem Ausführungsbeispiel zueinander gleichachsig angeordnet, es können insbesondere hinsichtlich des Elektromotors und/oder der Bremse jedoch auch ungleichachsige Anordnungen vorgesehen sein.

Die Zuspannvorrichtung und deren Teile nehmen im gelösten Zustand der Reibungsbremse 9 die ersichtlichen Lagen ein, lediglich die Rollen 20 befinden sich nahe der Flächenabschnitte 27 auf den Keilflächen 19, in Fig.1 sind sie einer mittleren, ersten Bremsstufe entsprechend im mittleren Teil der Keilflächen 19 anliegend gezeichnet. Die Speicherfeder 5 belastet den Betätigungsstößel 6, der in dieser Belastungsrichtung über den Ringflansch 18, das Axiallager 17, den über die Klauenkupplung 21 von der betätigten Bremse 25 undrehbar gehaltenen Drehkeil 15 und die Rollen 20 unverschieblich gegen das Gehäuse 1 abgestützt ist. Die Feder 13 hält den Drehhebel 10 in Anlage am Anschlag 12a, wobei der Schalter 11 unbetätigt ist.

Zum Einbremsen wird die Bremse 25 gelöst, was beispielsweise durch Entregen bewirkt werden kann. Der Drehkeil 15 wird hierduch drehfrei und beginnt sich in Ablaufrichtung der Rollen 20 auf den Keilflächen 19 unter der Kraft der Speicherfeder 5 zu drehen, wobei über die Klauenkupplung 21 und die Antriebsscheibe 22 der Elektromotor 24 mitrotiert. Der Betätigungsstößel 6 wird hierbei von der Speicherfeder 5 mitsamt dem Drehkeil 15 nach links verschoben, wobei die Bremszange 7 zugespannt und die Reibungsbremse 9 betätigt wird. Bei Erreichen einer ersten Bremsstufe mit Abgabe einer mittelstarken Zuspannkraft für die Bremszange 7 übt letztere auf den Drehhebel 10 eine Kraft aus, die ausreicht, diesen entgegen der Kraft der Feder 13 unter Abheben vom Anschlag 12a bis zur Anlage am Anschlag 12b zu drehen, wobei der Schalter 11 geschaltet wird und ein Signal zum Betätigen der Bremse 25 abgibt. Die Bremse 25 hält damit die Zuspannvorrivhtung mit im mittleren Bereich der Keilflächen 19 anliegenden Rollen 20 fest.

Beim weiteren Einbremsen zur zweiten Bremsstufe mit einer als maximal vorbestimmten Zuspannkraft läuft nach Lösen der Bremse 25 der Drehkeil 15 Mit seinen steilen Anlaufflächen 26 an die bis dahin weiter auf den Keilflächen 19 abgerollten Rollen 20 an und wird hierdurch in seiner Drehbewegung gestoppt. Beim Anlaufen der Rollen 20 an die Anlaufflächen 26 und hierdurch bedingten, plötzlichen Stoppen des Drehkeils 15 können der Elektromotor 24 und das Getriebe 23 mit der Antriebsscheibe 22 noch einen Drehauslauf vor ihrem Stillstand ausführen, wodurch sie vor unzuträglich hohen Drehverzögerungen geschützt werden: Beim plötzlichen Anhalten des Drehkeiles 15 dreht der Drehschwung die Antriebsscheibe 22 noch etwas weiter, wobei sich die Seitenflächen 30 der Klauen 28 und 29 der Klauenkupplung 21 voneinander abheben. Die Bremse 25 kann hierbei gelöst bleiben, sie kann aber auch betätigt werden.

Das Betätigen der Bremse 25 bei Erreichen der ersten Bremsstufe für die Reibungsbremse 9 kann auch andersartig als vorstehend vermittels des Schalters 11 beschrieben erfolgen.

Zum nachfolgenden Lösen der Reibungsbremse 13 wird gegebenenfalls nach Lösen der Bremse 25 der Elektromotor 24 eingeschaltet, wodurch über das Untersetzungsgetriebe 23 anfänglich nur die Antriebsscheibe 22 in Drehrichtung des Pfeiles 31 bis zur Wiederanlage der Seitenflächen 30 der Klauenkupplung 21 und sodann über diese der Drehkeil 15 in Auflaufrichtung der Rollen 20 auf die Keilflachen 19 bis kurz vor Erreichen der Flächenabschnitte 27 gedreht werden. Der Drehkeil 15 wird hierbei nach rechts verschoben und nimmt vermittels des Axiallagers 17 und des Ringflansches 18 den Betätigungsstößiel 6 mit. Dabei wird die Speicherfeder 5 über den Federteller 4 wieder gespannt und die Bremszange 7 wird unter Lösen der Reibungsbremse 9 entspannt.

Beim beschriebenen Ausführungbeispiel befinden sich im Lösezustand die Rollen 20 kurz vor den Flächenabschnitten 27 noch in Anlage an den geneigten Keilflächen 19. Hierdurch wird eine Sicherheitsfunktion der Zuspannvorrichtung erreicht: Beim Lösen der Bremse 25 durch gewolltes oder infolge einer Störung, wie z.B. Stromausfall, ungewolltes Entregen beginnen die Rollen 20 auf den Keilflächen 19 abzurollen und die Zuspannvorrichtung selbsttätig zum Zuspannen der Reibungsbremse 9 zu betätigen. In Abänderung ist es auch möglich, daß beim Lösen die Rollen 20 bis auf die ebenen Flächenabschnitte 27 auflaufen: Hierbei wird die Zuspannvorrichtung selbsttätig, auch bei gelöster Bremse 25, in ihrer unbetätigten Stellung gehalten und zu ihrer Betätigung muß zumindest anfänglich, bis zum Einlaufen der Rollen 20 in die geneigten Keilflächen 19, der Elektromotor (24) entsprechend, in Drehrichtung der Antriebsscheibe 22 in Pfeilrichtung 34, eingeschaltet werden. Zum Vermeiden eines Wechsels der anliegenden Seitenflächen an der Klauenkupplung 21 kann dabei der Drehkeil 15 eine zum Mitdrehen des Getriebes 23 und des Elektromotors 24 nicht ausreichende, schwache und federnde, nicht dargestellte Drehbelastung erhalten. Bei jeder Ausführungsart können die ebenen Flächenabschnitte 27 als ein Notauslauf für die Rollen 20 genutzt werden.

Die Zuspannvorrichtung ist ein- oder zweistufig, mehrstufig oder analog wirkend ausbildbar. Während Betätigungsvorgängen kann der Elektromotor 24 zum Begrenzen seiner Drehzahl und damit Vermeiden harter Bremsrucke und übermäßig harter Auflaufstöße der Rollen 20 auf die Auflaufflächen 26 kurzgeschlossen werden.

### Kurzfassung:

Bei einer elektromechanischen Zuspannvorrichtung für Reibungsbremsen (9) von insb. Schienenfahrzeugen, die einen durch einen Elektromotor (24) über ein Dreh- in Axialbewegungen und vice versa umsetzendes Getriebe (14) spannbaren Federspeicher (2) zum Zuspannen einer Bremszange (7) aufweist, ist zwischen den Elektromotor (24) und das Getriebe (14) eine Axialverschiebungen erlaubende und einseitig eine begrenzte Freilaufwirkung aufweisende, axiale Klauenkupplumg (21) eingeordnet. Die durch Abheben der Klauen (28;29) voneinander realisierte Freilaufwirkung ermöglcht beim Erreichen einer Vollbetätigungsstellung beim plötzlichen Anhalten des federspeicherseitigen Teiles der Klauenkupplung (21) dem Elektromotor (24) einen Drehauslauf, wodurch er vor hohen Drehverzögerungen geschützt wird.

### Liste der Bezugszahlen

- 1: Gehäuse
- 2: Federspeicher
- 3: Gehäusewandung
- 4: Federteller
- 5: Speicherfeder
- 6: Betätigungsstößel
- 7: Bremszange
- 8: Bremsscheibe
- 9: Reibungsbremse
- 10: Drehhebel
- 11: Schalter
- 12a: Anschlag
- 12b: Anschlag
- 13: Feder
- 14: Getriebe
- 15: Drehkeil
- 16: Verlängerung
- 17: Axiallager
- 18: Ringflansch
- 19: Keilfläche
- 20: Rolle
- 21: Klauenkupplung -
- 22: Antriebsscheibe
- 23: Untersetzungsgetriebe -
- 24: Elektromotor
- 25: Bremse
- 26: Anlauffläche
- 27: Flächenabschnitt
- 28: Klaue
- 29: Klaue
- 30: Seitenflächen
- 31: Pfeilrichtung
- 32: Seitenfläche
- 33: Seitenfläche
- 34: Pfeilrichtung

## Patentansprüche

1. Elektromechanische Zuspannvorrichtung für Reibungsbremsen (13) von Fahrzeugen, insbesondere Schienenfahrzeugen, mit einem vermittels eines axial verschieblichen Betätigungsstößels (6) Zuspannkräfte für die Reibungsbremse (9) ausübenden Federspeicher (2), der durch einen Elektromotor (24) über einen in dieser Drehrichtung sperrenden Freilauf und ein Dreh- in Axialbewegungen und vice versa umsetzendes, drehkeilartiges Getriebe (14) spannbar ist, und mit einer elektrisch schaltbaren Bremse (25) für den Elektromotor (24),
dadurch gekennzeichnet,
daß das Getriebe (14) einen auf dem Betätigungsstößel (6) bzw. einem mit diesem verbundenen Teil (Verlängerung 16) drehbar gelagerten und zumindest in Spannrichtung des Federspeichers (2) axial abgestützten Drehkeil (15) aufweist, der Axialverschiebungen ermöglichend mit dem Freilauf gekoppelt ist und an dessen zumindest einer Keilfläche (19) eine am Gehäuse (1) des Federspeichers (2) drehbar gelagerte Rolle (20) abrollbar anliegt.

2. Zuspannvorrichtung nach Anspruch 1, dadurch gekennzeichnet, daß der Freilauf als Klauenkupplung (21) ausgebildet ist, die nahe des radial äußeren Randes des Drehkeils (15) auf dessen der Keilfläche (19) abgewandten Seite und einer mit dem Elektromotor (24) drehgekoppelten, zum Drehkeil (15) gleichachsigen Antriebsscheibe (22) jeweils einander zugewandt axial vorspringende und einander axial übergreifende Klauen (28; 29) aufweist, und daß die Klauen (28;29) mit ihren in Umfangsrichtung liegenden Seitenflächen (30) in Übertragungsrichtung eines in Spannrichtung des Federspeichers (2) wirkenden Drehmomentes von der Antriebsscheibe (22) auf den Drehkeil (15) aneinander anlegbar sind, wobei sich zwischen ihren anderseitigen Seitenflächen (32;33) ein Abstand befindet.

3. Zuspannvorrichtung nach Anspruch 1 oder 2, dadurch gekennzeichnet, daß der Drehkeil (15) in Umfangsrichtung gleichmäßig versetzt mehrere schraubenflächenartige Keilflächen (19) aufweist, an deren jeder eine Rolle (20) abrollbar ist und die jeweils an ihrem einen, in Drehrichtung zum Entspannen des Federspeichers (2) liegenden Ende mittels einer axial steilen Anlauffläche (26) an das jeweilig andere Ende der in dieser Umfangsrichtung nächstfolgenden Keilfläche (19) anschließen.

4. Zuspannvorrichtung nach Anspruch 3, dadurch gekennzeichnet, daß die Anlaufflächen (26) dem Durchmesser der Rollen (20) zumindest angenähert gerundet ausgebildet sind.

5. Zuspannvorrichtung nach Anspruch 3 oder 4, dadurch gekennzeichnet, daß die Keilflächen (19) an ihrem jeweils anderen Ende einen in einer Radialebene verlaufenden, ebenen Flächenabschnitt (27) aufweisen.

6. Zuspannvorrichtung nach einem oder mehreren der vorstehenden Ansprüche, dadurch gekennzeichnet, daß der Drehkeil (15) über ein Axiallager (17) gegen einen Ringflansch (18) am Betätigungsstößel bzw. dein mit diesem verbundenen Teil (Verlängerung 16) abgestützt ist.

## Claims

1. Electromechanical application device for friction brakes (13) of vehicles, particularly railway vehicles, with a spring-loading means (2) exerting application forces for the friction brakes (9) by means of an axially displaceable actuation stem (6), the spring-loading means being loadable by means of an electric motor (24) via a free-wheel, blocking in this rotational direction, and a rotating wedge-type gear (14), converting a rotational movement into an axial movement and vice versa, and with an electrically switchable brake (25) for the electric motor (24), characterised in that the gear (14) has a rotating wedge (15), rotatably mounted on the actuating stem (6) or a part (extension 16) connected to this and axially supported at least in the direction of loading of the spring-loading means (2), the rotating wedge being coupled to the free-wheel so as to permit axial displacements, and a roller (20), rotatably mounted on the housing (1) of the spring-loading means (2), is arranged to roll over at least one wedge surface (19) of the rotating wedge.

2. Application device according to claim 1, characterised in that the free-wheel is constructed as a dog clutch (21), which near the radially outer edge of the rotating wedge (15) on its side facing away from the wedge surface (19) and on a drive disc (22) coaxial to the rotating wedge (15) and rotatably coupled to the electric motor (24) has dogs (28; 29) projecting axially towards each other and axially overlapping each other and that the dogs (28; 29) can be moved up to each other with their side faces (30) lying in the circumferential direction in the direction of transfer of a twisting moment, acting to load the spring-loading means (2), from the drive disc (22) to the rotating wedge (15), a spacing being present between the side faces (32; 33) on the other side.

3. Application device according to claim 1 or 2, characterised in that the rotating wedge (15) has several helicoidal surface-type wedge surfaces (19) distributed equally in the circumferential direction, on each of which a roller (20) is rollable and which at one end lying in the direction of rotation for release of the spring-loading means (2) each connect by means of an axially steep approach face (26) to the respective other end of the next wedge surface (19) in this circumferential direction.

4. Application device according to claim 3, characterised in that the approach faces (26) are constructed at least approximately rounded to the diameter of the rollers (20).

5. Application device according to claim 3 or 4, characterised in that the wedge surfaces (19) have a level surface section (27) running in a radial plane at their respective other end.

6. Application device according to one or more of the preceding claims, characterised in that the rotating wedge (15) is supported by an axial bearing (17) against a ring flange (18) on the actuation stem or the part (extension 16) connected to this.

## Revendications

1. Dispositif de serrage électromécanique pour des freins à friction (13) de véhicules, notamment de véhicules sur rails, comprenant un accumulateur à ressort (2) qui exerce, au moyen d'un poussoir d'actionnement (6) mobile axialement, des forces de serrage pour le frein à friction (9), et qui peut être mis en contrainte par un moteur électrique (24), par l'intermédiaire d'un embrayage à roue libre bloquant dans ce sens de rotation et d'une transmission (14) du type à coin rotatif convertissant des mouvements de rotation en mouvements axiaux et vice versa, le dispositif de serrage comprenant également un frein (25) à commande électrique pour le moteur électrique (24),
caractérisé en ce que la transmission (14) comporte un coin rotatif (15), qui est monté en rotation sur le poussoir d'actionnement (6) ou sur une pièce (prolongement 16) reliée à celui-ci et qui est soutenu axialement au moins dans la direction de la mise en contrainte de l'accumulateur à ressort (2), ce coin rotatif étant accouplé à l'embrayage à roue libre d'une manière permettant des déplacements axiaux, tandis que sur l'une au moins (19) de ses surfaces en coin, s'appuie, en pouvant y rouler, un galet (20) monté en rotation sur le carter (1) de l'accumulateur à ressort (2).

2. Dispositif de serrage selon la revendication 1, caractérisé en ce que l'embrayage à roue libre est réalisé sous la forme d'un accouplement à crabots (21), qui comporte, à proximité du bord radialement extérieur du coin rotatif (15), sur la face de celui-ci opposée à la surface en coin (19) et sur un disque d'entraînement (22) accouplé en rotation au moteur électrique (24) et de même axe que le coin rotatif (15), des crabots (28 ; 29) en saillie axiale, respectivement dirigés l'un vers l'autre et se chevauchant axialement, et en ce que les crabots (28 ; 29) peuvent s'appuyer l'un sur l'autre avec leurs surfaces latérales (30) se trouvant en direction circonférentielle, dans le sens de transmission d'un couple appliqué par le disque d'entraînement (22) sur le coin rotatif (15) et agissant dans la direction de la mise en contrainte de l'accumulateur à ressort (2), un écartement existant entre leurs surfaces latérales (32 ; 33) situées de l'autre côté.

3. Dispositif de serrage selon la revendication 1 ou 2, caractérisé en ce que le coin rotatif (15) présente décalées régulièrement dans la direction circonférentielle, plusieurs surfaces en coin (19) du type surface en hélice, sur chacune desquelles peut rouler un galet (20), et qui, à une première extrémité située, dans le sens de rotation, du côté correspondant à la détente de l'accumulateur à ressort (2), se raccordent chacune, par l'intermédiaire d'une surface d'attaque (26) à forte pente axiale, à la seconde extrémité de la surface en coin (19) suivante dans cette direction circonférentielle.

4. Dispositif de serrage selon la revendication 3, caractérisé en ce que les surfaces d'attaque (26) sont d'une configuration arrondie, au moins approximativement adaptée au diamètre des galets (20).

5. Dispositif de serrage selon la revendication 3 ou 4, caractérisé en ce que les surfaces en coin (19) présentent chacune à leur seconde extrémité, un tronçon de surface plan (27) s'étendant dans un plan radial.

6. Dispositif de serrage selon une ou plusieurs des revendications précédentes, caractérisé en ce que le coin rotatif (15) s'appuie, par l'intermédiaire d'un palier de butée axiale (17), sur une collerette annulaire (18) du poussoir d'actionnement ou de la pièce (prolongement 16) reliée à celui-ci.
